(19) Europäisches Patentamt
European Patent Office
Office européen des brevets

(11) **EP 4 244 571 B1**

(12) **FASCICULE DE BREVET EUROPEEN**

(45) Date de publication et mention
de la délivrance du brevet:
**16.07.2025 Bulletin 2025/29**

(21) Numéro de dépôt: **21811036.9**

(22) Date de dépôt: **16.11.2021**

(51) Classification Internationale des Brevets (IPC):
*G01B 7/16* (2006.01) *G01L 1/22* (2006.01)

(52) Classification Coopérative des Brevets (CPC):
**G01B 7/18; G01L 1/2287**

(86) Numéro de dépôt international:
**PCT/EP2021/081780**

(87) Numéro de publication internationale:
**WO 2022/101494 (19.05.2022 Gazette 2022/20)**

(54) **JAUGE D'EXTENSOMÉTRIE INORGANIQUE**

ANORGANISCHER DEHNUNGSMESSER

INORGANIC STRAIN GAUGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2020 FR 2011737**

(43) Date de publication de la demande:
**20.09.2023 Bulletin 2023/38**

(73) Titulaire: **Commissariat à l'Energie Atomique et aux Energies Alternatives
75015 Paris (FR)**

(72) Inventeur: **FENDLER, Manuel
38054 Grenoble cedex 09 (FR)**

(74) Mandataire: **Ipsilon
11 rue Saint-Georges
75009 Paris (FR)**

(56) Documents cités:
**EP-A2- 1 990 633          FR-A1- 2 942 874
US-A- 5 375 474          US-A1- 2005 115 329
US-A1- 2005 160 837**

• **MAIWALD M ET AL: "INKtelligent printed strain gauges", PROCEDIA CHEMISTRY, ELSEVIER, AMSTERDAM, NL, vol. 1, no. 1, 1 September 2009 (2009-09-01), pages 907 - 910, XP026799693, ISSN: 1876-6196, [retrieved on 20090901]**
• **KAYSER P ET AL: "High-temperature thin-film strain gauges", SENSORS AND ACTUATORS A: PHYSICAL, ELSEVIER BV, NL, vol. 37-38, 1 June 1993 (1993-06-01), pages 328 - 332, XP026576906, ISSN: 0924-4247, [retrieved on 19930601], DOI: 10.1016/0924-4247(93)80055-L**

**Description**

La présente invention concerne la mesure de déformation au moyen d'une jauge d'extensométrie par contact.

Une jauge d'extensométrie par contact permet de mesurer la déformation d'un corps selon une direction donnée. A cette fin, elle est en contact, généralement collée, avec le corps dont on cherche à mesurer la déformation.

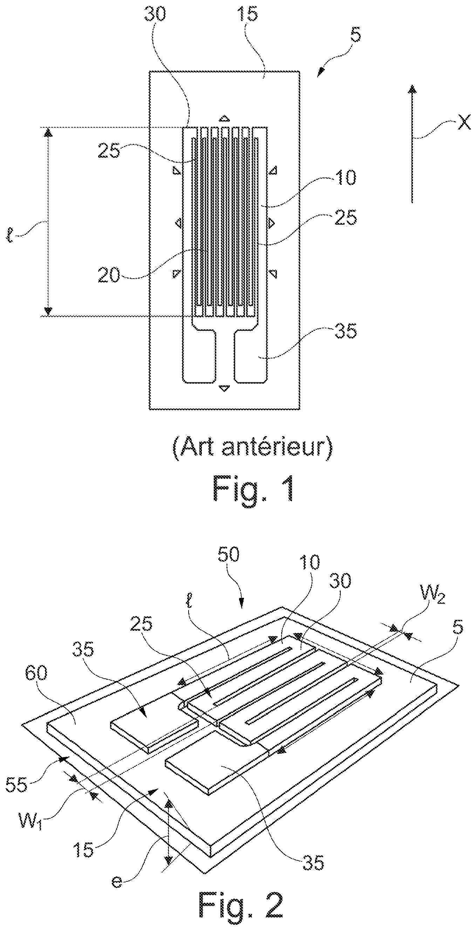

Comme cela est illustré sur la figure 1, une jauge d'extensométrie 5 par contact est classiquement constituée d'un organe résistif 10 métallique, sous la forme d'un fil ou d'une piste, fixé sur un support 15 mince et électriquement isolant. L'organe résistif présente une forme de serpentin 20. Il est formé majoritairement de portions rectilignes 25 s'étendant parallèlement les unes aux autres et sont reliées par des portions de raccord 30. Les extrémités du serpentin sont prolongées par des plots de connexion 35 afin de relier la jauge à une instrumentation, par exemple par soudage de câbles de connexion.

Pour mesurer la déformation d'un corps déformable $\varepsilon_{xx}$ suivant une direction X, la jauge d'extensométrie est collée sur le corps de telle sorte que les portions rectilignes 25 sont disposées parallèlement à la direction X.

Lors de la déformation du corps, les portions rectilignes de longueur 1 s'allongent ou se rétractent, ce qui se traduit par une variation de la résistance R du fil.

La variation $\Delta R$ de la résistance est, en première approximation, proportionnelle à l'allongement $\Delta l$ de chaque portion rectiligne selon l'équation (1)
[Math 1]

$$\frac{\Delta R}{R} = K \frac{\Delta l}{l} \qquad (1)$$

Dans l'équation (1), K est une constante, dénommée facteur de jauge, qui dépend du matériau constitutif du fil considéré. K vaut par exemple 2 pour un fil en constantan ou en nickel-chrome, et vaut 3,2 pour un fil en élinvar.

En considérant que la déformation du fil est homologue à la déformation de la portion du corps sur laquelle la jauge d'extensométrie est fixée, il est ainsi possible de déterminer la déformation $\varepsilon_{xx}$ du corps en mesurant la variation relative de la résistance du fil métallique de la jauge d'extensométrie, selon l'équation (2)
[Math 2]

$$\varepsilon_{xx} = \frac{1}{K} \frac{\Delta R}{R} \qquad (2)$$

Ainsi, lorsque le corps présente un comportement élastique, il est possible de déterminer la contrainte s'appliquant sur le corps le long de l'axe X sous la jauge d'extensométrie.

Le corps déformable peut notamment être une partie d'un capteur mécanique. Il est alors dénommé corps d'épreuve. La mesure de la déformation du corps d'épreuve permet ainsi de déterminer indirectement une grandeur mécanique telle qu'une force, une accélération, une pression, l'amplitude d'une vibration...

Le support d'une jauge d'extensométrie est en un matériau électriquement isolant, afin de ne pas perturber la mesure de la variation de la résistance du fil. En outre, il est suffisamment mince pour que la déformation des portions rectilignes soit identique à la déformation de la portion du corps qu'il recouvre.

Généralement, le support est en un matériau polymère.

Par exemple, un support d'une épaisseur d'environ 20 μm à 30 μm peut être obtenu en mettant en œuvre des résines époxydes. Des jauges d'extensométrie de haute précision peuvent ainsi être fabriquées, mais qui ne peuvent pas être utilisées à des températures supérieures à 100 °C. Pour élargir la gamme de températures d'utilisation des jauges jusqu'à 350 °C, des supports de jauge ont été développés et qui sont obtenus par laminage à chaud et sous pression d'un mélange de résines époxydes et phénoliques renforcées par des fibres de verre. Les jauges ainsi obtenues sont aptes à mesurer des déformations de 2,0 % au plus.

Des jauges dotées de supports en polyimide sont aussi connues. De tels supports sont flexibles et résistants, les polyimides présentant des limites de déformation à rupture de 20 % environ et jusqu'à 400 °C lorsqu'elles sont renforcées par des charges. Les jauges à support en polyimide sont plus particulièrement adaptées aux mesures de déformation pour lesquelles une grande précision n'est pas recherchée.

Différentes méthodes de fabrication de jauges d'extensométrie à support à base de matériau organique sont connues.

Par exemple, l'une d'entre elles met à profit les techniques du domaine des circuits imprimés de photolithographie et d'attaque sélective pour obtenir une jauge d'extensométrie dite pelliculaire, formée à partir d'un support en résine époxy d'une épaisseur comprise entre 20 et 30 microns et d'une feuille métallique d'une épaisseur de 50 microns.

Il est connu de fabriquer des jauges d'extensométrie au moyen de techniques d'impression. La déformation du corps sur laquelle la jauge est imprimée est par exemple déterminée à partir de la variation de résistivité d'une charge de particules métalliques dans un liant polymère. Les articles « INKtellingent printed strain gauge », M. Maiwald et al., Sensors and Actuators A, 162, pp. 198-201 (2010), *et* « Nanoparticle films as sensitive strain gauges », J. Herrmann et al., Appl. Phys. Lett., 91, 183105 (2007) décrivent des exemples de telles jauges imprimées. La plage d'utilisation en température des jauges imprimées est cependant limitée. En outre, elles nécessitent des appareillages de fabrication complexes, dont la capacité d'accueil est limitée, ce qui limite donc les dimensions des corps pouvant être instrumentés au moyen d'une jauge.

Il existe peu de jauges d'extensométrie pouvant être mises en contact avec un corps qui sont aptes à mesurer la déformation de ce corps à une température supérieure à 400 °C.

L'article « High temperature thin-films strain gauges », P. Kayser et al., Sensors and Actuators A, 37-38, pp. 328-332 (1993) décrit la formation, au contact d'une aube de turbine d'un moteur d'avion, d'une jauge d'extensométrie en déposant par pulvérisation cathodique, une couche d'alumine $Al_2O_3$ surmontée par une couche résistive en un alliage NiCr/PdCr. Une telle jauge est ainsi adaptée à mesurer des déformations à une température de 900 °C de fonctionnement de l'aube. Cependant, le procédé décrit dans Kayser et al. ne peut être mis en œuvre que pour des corps d'un volume inférieur à 1 m³, qui peuvent être introduits dans la chambre sous vide d'un dispositif de pulvérisation cathodique. Il n'est par exemple pas possible d'instrumenter un ouvrage, par exemple un pont, ou un équipement industriel, par exemple une presse pesant plusieurs tonnes au moyen d'un tel procédé. En outre, un tel procédé ne peut pas être mis en œuvre sur tout type de matériau constitutif du corps, et notamment pas sur des matériaux qui peuvent dégazer et empêchent l'obtention d'un vide nécessaire à la mise en œuvre de la pulvérisation cathodique.

Le document FR2942874 A1 divulgue un dispositif de mesure d'une déformation selon l'état de la technique.

Il existe donc un besoin pour surmonter les inconvénients décrits ci-dessus.

L'invention propose un dispositif de mesure d'une déformation tel que décrit dans la revendication 1.

Le dispositif selon l'invention permet de mesurer une déformation du corps déformable à une température supérieure à 400 °C, voire supérieure à 700 °C, voire même supérieure à 1000 °C.

En outre, comme cela apparaîtra clairement par la suite, la jauge d'extensométrie peut être facilement formée sur le corps qui peut présenter une grande taille. En particulier, elle peut être formée directement sur site, sans nécessité de rapatrier le corps dans un atelier pour y déposer la jauge.

Le composé céramique peut représenter plus de 50 % de la masse du matériau de support.

Il peut être choisi parmi $Al_2O_3$, AlN, $SiO_2$, MgO, un mica, SiC, $ZrO_2$, $ZrSiO_2$, CaO, $Cu_2O$, CuO, $Y_2O_3$, l'oxyde d'indium étain, $TiO_2$ et leurs mélanges.

Le composé céramique est de préférence un oxyde.

Le matériau de support comporte, voire est constitué par, un ciment hydraté et/ou une colle céramique durcie.

Le matériau de support peut consister en une matrice liante et une charge formée de particules dispersées dans la matrice liante. La matrice liante relie les particules entre elles de façon à conférer une cohésion au matériau de support.

La masse de la charge peut représenter au moins 50 % de la masse du matériau de support.

La charge peut comporter, voire consister en au moins une fraction particulaire formée de particules en au moins un matériau choisi parmi $Al_2O_3$, AlN, $SiO_2$, MgO, un mica, SiC, $ZrO_2$, $ZrSiO_2$, CaO, $Cu_2O$, CuO, $Y_2O_3$, l'oxyde d'indium étain, $TiO_2$ et leurs mélanges.

Elle peut comporter, voire consister en au moins une fraction particulaire formée de particules en au moins un matériau oxyde choisi parmi $Al_2O_3$, $SiO_2$, MgO, un mica, SiC, $ZrO_2$, $ZrSiO_2$, CaO, $Cu_2O$, CuO, $Y_2O_3$, l'oxyde d'indium étain, $TiO_2$ et leurs mélanges.

La charge peut comporter, voire consister en plusieurs fractions particulaires, les particules de chaque fraction particulaire étant en un matériau différent du ou des matériaux constituant la ou les autres fractions particulaires.

La matrice liante comporte de préférence pour plus de 90 % de sa masse, voire pour plus de 95 % de sa masse, voire pour plus de 99 % de sa masse, un liant inorganique.

Le liant inorganique peut être un liant hydraulique hydraté.

Le liant inorganique peut comporter au moins un composé choisi parmi le silicate de sodium, la chaux, le silicate d'alumine, le silicate de calcium, l'aluminate de calcium, une argile notamment siliceuse, des cendres volantes notamment activables par des matériaux alcalins et leurs mélanges.

Par ailleurs, la matrice liante peut comporter un liant organique, pour moins de 5 %, voire pour moins de 1 % de sa masse. En particulier, la matrice liante peut être exempte de composés organiques. Par composé organique, on entend tout composé dont la formule chimique comporte au moins des atomes de carbone et d'hydrogène.

Le matériau de support peut être fritté.

Le matériau de support est électriquement isolant, c'est-à-dire qu'il présente une résistivité volumique supérieure à $10^{14}$ $\Omega$.cm et une tension de claquage, mesurée en courant alternatif, supérieure à 6000 V.

Le support présente une porosité de préférence comprise entre 10 % et 40 %, afin de conférer une bonne résistance mécanique au support.

La porosité du support peut être déterminée de la façon suivante. Tout d'abord, le support est infiltré avec une résine. Une tranche du support ainsi infiltré est découpée puis polie, afin d'obtenir un bon état de surface. Le polissage est effectué au minimum avec un papier grade 1200, de préférence avec une pâte diamantée. Des clichés sont réalisés à l'aide d'un microscope électronique à balayage (MEB), de préférence dans un mode utilisant les électrons rétrodiffusés qui confère un contraste élevé entre le matériau de support et la résine.

Chaque cliché présente au minimum 1024 x 768 pixels. Le grandissement utilisé est tel que la largeur de l'image soit comprise entre 50 fois et 100 fois la taille moyenne des pores, notamment de telle sorte à prendre en compte les pores d'une taille comprise entre 10 nm et 10 $\mu$m. Un premier cliché peut être réalisé grâce à une estimation visuelle de la taille moyenne des pores. L'aire occupée par les pores est déterminée par analyse des clichés selon la méthode d'érosion/dilatation mise en œuvre dans un logiciel d'analyse d'image tel qu'ImageJ (https://imagej.nih.gov/ij/). La porosité est déterminée, en sommant l'aire occupée par l'ensemble des pores sur les clichés sur la somme des aires totales de chaque cliché.

Le support est monocouche.

Le support présente de préférence une épaisseur d'au moins quarante fois inférieure à l'épaisseur du corps déformable. Un bon couplage mécanique de la jauge d'extensométrie avec le corps déformable est ainsi assuré. L'épaisseur du corps déformable est mesurée sous le support selon une direction normale au support.

L'épaisseur du support est comprise entre 0,05 mm et 5,00 mm. Elle peut être choisie en fonction des caractéristiques de l'organe résistif afin d'assurer une isolation électrique optimale entre le corps déformable et l'organe résistif.

Le support présente de préférence une forme mince. Par exemple, le rapport de la longueur sur l'épaisseur de la plaque est d'au moins 10, de préférence d'au moins 100.

Le support peut être plan ou courbe.

L'organe résistif peut comporter une pluralité de portions rectilignes reliées deux à deux par des portions de raccord de manière à présenter une forme d'un serpentin. Les portions de raccord peuvent être droites ou courbes.

Il peut comporter entre 1 et 500 portions rectilignes.

Les portions rectilignes peuvent chacune présenter une longueur comprise entre 0,3 mm et 150 mm

En variante, l'organe résistif peut être une piste formée sur le support, qui peut être formée par dépôt d'une pâte résistive ou par projection d'une poudre de particules métalliques.

L'organe résistif peut être une colle céramique durcie. Il peut être un ciment hydraté chargé en un métal, de préférence choisi parmi Ni, Ag et leur mélange.

L'épaisseur de la piste peut être comprise entre 0,025 mm et 1 mm. La largeur de la piste peut être comprise entre 0,025 mm et 15 mm. La distance entre deux portions rectilignes adjacentes peut être comprise entre 0,025 mm et 15 mm. Elle est mesurée dans le plan du support selon un axe perpendiculaire à l'axe d'extension d'une des portions rectilignes.

L'organe résistif peut être un fil. Le fil peut présenter un diamètre compris entre 0,025 mm et 1,0 mm. Le fil peut être déposé avant durcissement du matériau de support. De préférence, le fil est enrobé, de préférence sur l'intégralité de sa face latérale, dans le matériau de support.

L'organe résistif peut présenter une section transverse de section variée, par exemple circulaire, rectangulaire ou carrée. L'aire de la section transverse peut être comprise entre 0,0005 et 15 mm$^2$.

La résistance de l'organe résistif peut être comprise entre 50 $\Omega$ et 2000 $\Omega$, de préférence 120 $\Omega$ ou 350 $\Omega$. Un organe résistif de haute résistance permet d'augmenter la précision de la mesure de déformation, conformément à l'équation (1).

L'organe résistif peut comporter pour plus de 40 % de sa masse au moins un métal choisi parmi le cuivre, l'aluminium, l'or, l'argent, le titane, le palladium, le nickel, le fer, le platine, le titane, l'étain et leurs alliages. En particulier, l'organe résistif peut comporter pour plus de 40 % de sa masse au moins un métal choisi parmi l'argent, le nickel et leur mélange.

En particulier, l'organe résistif peut être en un alliage choisi parmi :

- le constantan, comportant en pourcentages massiques, 55 % de nickel et 45 % de cuivre,
- le karma, comportant en pourcentages massiques, 74 % de nickel, 20 % de chrome, 3% d'aluminium et 3 % de fer,
- l'isoélastic, comportant en pourcentages massiques, 36 % de nickel, 8 % de chrome, 0,5 % de molybdène et 55,5 % de fer,
- le nichrome V, comportant en pourcentages massiques, 80 % de nickel et 20 % de chrome,
- un alliage comportant en pourcentages massiques, 92 % de platine et 8 % de tungstène, et
- l'armour, comportant en pourcentages massiques, 70 % de fer, 20 % de chrome et 10 % d'aluminium.

Par ailleurs, la jauge d'extensométrie peut comporter des plots de connexion, au contact du support et de l'organe résistif, afin de mettre en contact la jauge d'extensométrie avec une instrumentation de mesure, de la variation de résistance au cours de la déformation du corps. Les plots de connexion peuvent être étamés. Les plots de connexion peuvent être formés du même matériau que l'organe résistif. Un câble reliant l'instrumentation de mesure à la jauge d'extensométrie peut être soudé sur un des plots de connexion.

Le corps déformable peut être métallique, ou en un matériau cimentaire, ou en une céramique, ou en verre, ou en un plastique, notamment un thermoplastique, ou en composite, notamment un composite époxy-fibre de verre.

Le volume du corps déformable peut être supérieur à 1 m$^3$, voire supérieur à 5 m$^3$.

Le corps déformable peut être une structure ou une partie d'une structure, par exemple un ouvrage d'art, dont on souhaite mesurer une déformation.

La portion du corps déformable sur laquelle le support est en contact peut être plane ou courbée. Par exemple, elle présente une forme cylindrique de révolution ou sphérique.

Le dispositif selon l'invention peut être un capteur de mesure d'une grandeur mécanique, par exemple une pression ou une déformation, comportant un corps d'épreuve comportant le corps déformable. Un capteur est tel que la mesure de la mesure d'une déformation du corps d'épreuve permet de déduire la valeur de la grandeur mécanique.

Le corps déformable est par exemple un moule de thermoformage. La mesure de la déformation du corps déformable peut permettre de déterminer la pression au sein du moule de thermoformage, notamment au niveau de la surface moulante.

Selon un autre exemple, le corps déformable est un canal de remplissage d'un moule d'injection plastique. La mesure de la déformation du corps déformable peut permettre de déterminer l'amplitude de vibration du canal et ainsi de surveiller la propagation du front de polymérisation de la matière plastique injectée dans le moule.

Selon encore un autre exemple, le corps déformable est une pièce de fonderie, par exemple un corps de pompe. La mesure de la déformation du corps déformable peut permettre de déterminer l'amplitude de vibration du corps déformable, afin par exemple d'effectuer une maintenance préventive du corps déformable lorsque l'amplitude excède une valeur nominale.

Selon encore un autre exemple, le corps déformable est une prothèse, par exemple en titane. La mesure de la déformation peut permettre de déterminer l'intensité d'efforts s'appliquant sur la prothèse.

Par ailleurs, l'invention concerne un procédé de mesure d'une déformation, comportant :

- la fourniture d'un dispositif selon l'invention,
- le chauffage du corps déformable à une température supérieure à 400 °C, voire supérieure à 500 °C, voire supérieure à 700 °C, voire supérieure à 1000 °C, et
- la mesure de la déformation du corps au moyen de la jauge d'extensométrie.

L'invention concerne enfin un procédé de fabrication d'un dispositif de mesure d'une déformation, comportant les étapes de :

a) formation d'au moins une couche par dépôt d'une composition sur un corps déformable,
b) durcissement de la couche de manière à former un support,
c) dépôt d'un organe résistif au contact du support, de telle sorte que le dispositif soit conforme à l'invention.

La composition peut être une pâte cimentaire ou être une colle céramique. Une pâte cimentaire comporte un liant hydraulique, par exemple de la silice et/ou de la chaux, et de l'eau. Une colle céramique comporte des particules d'au moins une céramique réfractaire dans un liant. Les particules de céramique réfractaire peuvent être dispersées dans le solvant.

Le liant peut comporter :

- un composé inorganique, notamment choisi parmi une argile, la chaux, le silicate de sodium et leurs mélanges et/ou
- un composé organique, notamment choisis parmi le goudron, un bitume, une poix, un amidon notamment modifié un lignosulfonate, une mélasse, la cellulose, un dérivé de la cellulose, l'alcool polyvinilique, le polybutadiène et leurs mélanges.

La composition peut comporter pour au moins 50 % de sa masse au moins un matériau choisi parmi $Al_2O_3$, AIN, $SiO_2$, MgO, un mica, SiC, $ZrO_2$, $ZrSiO_2$, CaO, $Cu_2O$, CuO, $Y_2O_3$, l'oxyde d'indium étain, $TiO_2$ et leurs mélanges.

En particulier, elle peut comporter pour au moins 50 % de sa masse, de l'aluminium ou du zircon ou de la zircone. La composition peut ainsi être qualifiée comme étant réfractaire.

Par exemple la composition est choisie parmi une colle d'alumine ALUCEM-HT 2, une colle à base d'alumine JYALUCEM 20, une colle à base de zircon ZIRCOCEM 1 ou ZIRCOMCEM 5/5F ou une colle à base de zircone ZIRCOCEM 9, commercialisées par la société Anderman.

La pâte peut présenter une viscosité, mesurée au moyen d'un viscosimètre à tourbillon ou de couette, qui est comprise entre 1000 cps et 100 000 cps.

A l'étape a), la composition peut être enduite sur le support.

L'enduction de la composition peut être effectuée au moyen d'un pinceau, d'une seringue ou de préférence au moyen d'un dispositif d'impression, de préférence un dispositif d'impression 3D.

Le dispositif d'impression 3D peut comporter un robot comportant une base et un bras articulé mobile par rapport à la base. La base peut être fixée sur un bâti ou elle peut être montée sur un engin de transport. Le dispositif d'impression peut comporter une buse d'impression portée par le bras articulé, au travers de laquelle un cordon de la composition peut être extrudé et déposé sous la forme de la couche sur le support.

Le cordon peut être déposé en passes multiples de la buse d'impression sur le support afin de former la couche. Un tél dépôt en plusieurs couches permet d'optimiser le séchage et de faciliter l'élimination du liant.

Le procédé peut comprendre le lissage de la couche afin que la couche présente une épaisseur prédéterminée. Le lissage peut comporter le déplacement d'un outil lisseur sur une face de la couche. L'outil lisseur est par exemple une raclette ou un pinceau.

A l'étape b), le durcissement peut résulter de la prise du liant hydraulique contenu dans la pâte cimentaire.

Le durcissement peut résulter de l'évaporation du solvant contenu dans la colle. Le ou les constituants du liant peuvent en outre réagir avec les matériaux constitutifs des particules de céramique réfractaire pour lier les particules entre elles.

Le durcissement peut être obtenu par frittage de la composition.

Le procédé peut comporter le chauffage de la couche formée à l'étape a), afin d'accélérer le durcissement de la couche. Le chauffage peut être opéré jusqu'à ce que la température de la couche soit d'au moins 50 °C.

Le chauffage peut être opéré avec un soufflage d'air chaud sur la couche et/ou par illumination de la couche avec un rayonnement infra-rouge et/ou par convection forcée d'un flux d'air à température ambiante.

En fin d'étape b), la couche est considérée comme durcie dès que le module d'Young du matériau de support est supérieur ou égale à 80 % de la valeur du module d'Young du matériau de support mesuré après 24 heures de durcissement.

A l'étape c), le procédé comporte de préférence l'impression de l'organe résistif sur le support. L'impression de l'organe résistif peut être effectuée par une technique choisie parmi la sérigraphie ou l'extrusion d'une encre métallique ou d'une pâte métallique, et l'impression par jet d'une encre métallique.

En variante, l'organe résistif peut être imprimé par une technique de fabrication additive, notamment comportant la projection de particules métalliques sur le support, les vitesses des particules étant supersoniques. Une telle technique est dénommée « cold spray » en anglais.

L'invention pourra être mieux comprise à la lecture de la description détaillée qui va suivre, d'exemples de mise en œuvre non limitatifs de celle-ci, et à l'examen du dessin annexé, sur lequel :

[Fig. 1] la figure 1 représente schématiquement, en vue de face, une jauge d'extensométrie de l'art antérieur,
[Fig. 2] la figure 2 représente schématiquement, selon une vue en perspective, un exemple de réalisation d'un dispositif selon l'invention, et
[Fig. 3] la figure 3 représente un exemple de mise en œuvre du procédé de fabrication selon l'invention.

Les proportions relatives des éléments illustrés dans le dessin annexé n'ont pas toujours été respectées dans un souci de clarté du dessin.

On a représenté sur la figure 2 un exemple de dispositif 50 selon l'invention. Le dispositif comporte un corps 55 déformable et une jauge d'extensométrie 5 en contact avec le corps déformable.

La jauge d'extensométrie comporte un support 15 au contact du corps déformable, et un organe résistif 10.

L'organe résistif 10 est au contact de la face 60 du support opposée au corps 55 déformable.

L'organe résistif est une piste, qui présente une forme d'un serpentin. Elle présente des portions rectilignes 25 de longueur 1, par exemple égale à 10 mm. Dans l'exemple illustré, elle comporte six portions rectilignes, mais ce nombre n'est pas limitatif.

Les portions rectilignes présentent une épaisseur $W_1$ qui peut être égale à 0,5 mm. Les portions adjacentes sont séparées d'une distance $W_2$, par exemple égale à 0,1 mm.

Les portions rectilignes sont reliées entre elles deux à deux par des portions de raccord 30.

La jauge d'extensométrie comporte des plots de connexion 35, disposés sur la face 60 du support portant l'organe résistif. Les plots de connexion 35 sont en contact électrique avec l'organe résistif 10.

Le support est mince, par exemple ayant une épaisseur e de 50 μm. Il présente une porosité supérieure à 10%. Il est par exemple en une colle céramique durcie ou en un ciment céramique hydraté.

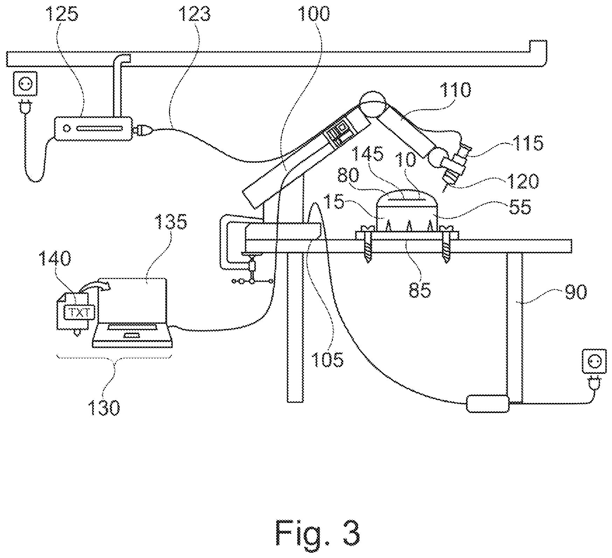

On a représenté sur la figure 3 un exemple de mise en œuvre du procédé de fabrication du dispositif selon l'invention.

Un corps déformable 55, présentant une portion hémisphérique 80 est monté sur un organe de bridage 85 vissé sur une table de bridage 95.

Un robot 100 comportant une base 105 et un bras articulé 110 monté sur la base est fixé sur la table de bridage. Il comporte en outre une seringue 115 comportant une buse d'application 120 pour déposer une composition sur le corps déformable. La buse d'application est alimentée, par l'intermédiaire d'un tube d'approvisionnement 123, par un distributeur 125 contenant la composition.

Le robot est commandé par une unité de pilotage 130 qui comporte un ordinateur 135 ayant une mémoire dans laquelle est chargé un programme 140 comportant des instructions pour piloter le robot et un processeur pour exécuter les instructions.

Un modèle 3D comportant la géométrie du corps déformable et la géométrie de la jauge d'extensométrie est défini qui est interprété par le programme afin de déterminer les différents trajets du bras articulés du robot et les ouvertures et fermetures de la buse d'alimentation. Le modèle 3D est chargé dans la mémoire de l'ordinateur.

Dans une première étape, le distributeur est chargé avec une composition à base d'au moins une céramique réfractaire et le bras articulé est déplacé le long de la face hémisphérique 145 du corps déformable selon l'un des trajets et la composition est déposée afin de former une couche. La couche est ensuite durcie pour former un support 15.

Dans une deuxième étape, une pâte métallique est introduite dans le distributeur en lieu et place de la composition céramique. Le bras articulé est alors déplacé le long du support selon un autre des trajets et la pâte métallique est déposée à travers la buse d'application sur le support 15 afin de former un organe résistif 10.

L'invention n'est toutefois pas limitée aux exemples, modes de réalisation et modes de mises en œuvre décrits ci-dessus.

**Revendications**

1. Dispositif (50) de mesure d'une déformation, le dispositif comportant un corps déformable (55) et une jauge d'extensométrie (5), la jauge d'extensométrie comportant un support (15) au contact du corps déformable et un organe résistif (10) métallique au contact du support, l'organe résistif présentant une résistance variable avec une déformation du corps déformable, le support étant électriquement isolant, poreux, monocouche et étant en au moins un matériau de support comportant au moins un composé céramique réfractaire, optionnellement hydraté, le matériau de support comportant un ciment hydraté et/ou une colle céramique durcie.

2. Dispositif selon la revendication 1, la porosité du support étant comprise entre 10 % et 40 %.

3. Dispositif selon l'une quelconque des revendications 1 et 2, le matériau de support étant constitué par un ciment hydraté et/ou une colle céramique durcie.

4. Dispositif selon l'une quelconque des revendications précédentes, le composé céramique représentant plus de 50 % de la masse du matériau de support, le composé céramique étant en particulier choisi parmi $Al_2O_3$, AlN, $SiO_2$, MgO, un mica, SiC, $ZrO_2$, $ZrSiO_2$, CaO, $Cu_2O$, CuO, $Y_2O_3$, l'oxyde d'indium étain, $TiO_2$ et leurs mélanges.

5. Dispositif selon l'une quelconque des revendications précédentes, le composé céramique étant un oxyde.

6. Dispositif selon l'une quelconque des revendications précédentes, l'épaisseur du support étant comprise entre 0,025 mm et 5,00 mm.

7. Dispositif selon l'une quelconque des revendications précédentes, l'organe résistif étant un ciment hydraté chargé en un métal, de préférence choisi parmi Ni, Ag et leur mélange.

8. Procédé de fabrication d'un dispositif de mesure d'une déformation, comportant les étapes de :

   a) formation d'une couche par dépôt d'une composition sur un corps déformable,
   b) durcissement de la couche de manière à former un support, le support étant électriquement isolant, poreux, monocouche et étant en au moins un matériau de support comportant au moins un composé céramique réfractaire, optionnellement hydraté, le matériau de support comportant un ciment hydraté et/ou une colle céramique durcie,
   c) dépôt d'un organe résistif au contact du support, de telle sorte que le dispositif soit conforme à l'une quelconque des revendications précédentes.

9. Procédé selon la revendication précédente, la composition étant une pâte cimentaire ou une colle céramique.

10. Procédé selon l'une quelconque des revendications 8 et 9, la composition étant enduite à l'étape a) sur le support, notamment au moyen d'un pinceau, d'une seringue ou de préférence au moyen d'un dispositif d'impression, de préférence un dispositif d'impression 3D.

11. Procédé selon l'une quelconque des revendications 8 à 10, comportant l'impression de l'organe résistif sur le support.

12. Procédé selon la revendication précédente, l'impression étant effectuée par une technique choisie parmi la sérigraphie ou l'extrusion d'une encre métallique ou d'une pâte métallique, et l'impression par jet d'une encre métallique.

13. Procédé selon la revendication 11, l'organe résistif étant imprimé par une technique de fabrication additive, notamment comportant la projection de particules métalliques sur le support, les vitesses des particules étant supersoniques.

14. Procédé de mesure d'une déformation, comportant :

   - la fourniture d'un dispositif selon l'une quelconque des revendications 1 à 7,
   - le chauffage du corps déformable à une température supérieure à 400 °C, voire supérieure à 500 °C, voire supérieure à 700 °C, voire supérieure à 1000 °C, et
   - la mesure de la déformation du corps au moyen de la jauge d'extensométrie.

**Patentansprüche**

1. Vorrichtung (50) zum Messen einer Verformung, wobei die Vorrichtung einen verformbaren Körper (55) und einen Dehnungsmessstreifen (5) umfasst, wobei der Dehnungsmessstreifen einen Träger (15) in Kontakt mit dem verformbaren Körper und ein metallisches resistives Element (10) in Kontakt mit dem Träger umfasst, wobei das resistive Element mit einer Verformung des verformbaren Körpers variablen Widerstand aufweist, wobei der Träger elektrisch isolierend, porös, einschichtig ist und aus mindestens einem Trägermaterial ist, das mindestens eine feuerfeste keramische, optional hydratisierte Verbindung umfasst, wobei das Trägermaterial einen hydratisierten Zement und/oder einen gehärteten keramischen Klebstoff umfasst.

2. Vorrichtung nach Anspruch 1, wobei die Porosität des Trägers zwischen 10 % und 40 % beträgt.

3. Vorrichtung nach einem der Ansprüche 1 und 2, wobei das Trägermaterial aus einem hydratisierten Zement und/oder einem gehärteten keramischen Klebstoff besteht.

4. Vorrichtung nach einem der vorhergehenden Ansprüche, wobei die keramische Verbindung mehr als 50 % der Masse des Trägermaterials ausmacht, wobei die keramische Verbindung insbesondere ausgewählt ist aus $Al_2O_3$, AlN, $SiO_2$, MgO, einem Glimmer, SiC, $ZrO_2$, $ZrSiO_2$, CaO, $Cu_2O$, CuO, $Y_2O_3$, Indium-Zinn-Oxid, $TiO_2$ und ihren Mischungen.

5. Vorrichtung nach einem der vorhergehenden Ansprüche, wobei die keramische Verbindung ein Oxid ist.

6. Vorrichtung nach einem der vorhergehenden Ansprüche, wobei die Dicke des Trägers zwischen 0,025 mm und 5,00 mm beträgt.

7. Vorrichtung nach einem der vorhergehenden Ansprüche, wobei das resistive Element ein hydratisierter Zement ist, der ein Metall enthält, das bevorzugt aus Ni, Ag und ihrer Mischung gewählt ist.

8. Verfahren zur Herstellung einer Vorrichtung zum Messen einer Verformung, umfassend die folgenden Schritte:

   a) Bilden einer Schicht durch Aufbringen einer Zusammensetzung auf einem verformbaren Körper,
   b) Härten der Schicht, so dass ein Träger gebildet wird, wobei der Träger elektrisch isolierend, porös, einschichtig ist und aus mindestens einem Trägermaterial ist, das mindestens eine feuerfeste keramische, optional hydratisierte Verbindung umfasst, wobei das Trägermaterial einen hydratisierten Zement und/oder einen gehärteten keramischen Klebstoff umfasst;
   c) Aufbringen eines resistiven Elements in Kontakt mit dem Träger, so dass die Vorrichtung einem der vorhergehenden Ansprüche entspricht.

9. Verfahren nach dem vorhergehenden Anspruch, wobei die Zusammensetzung eine Zementmasse oder ein keramischer Klebstoff ist.

10. Verfahren nach einem der Ansprüche 8 und 9, wobei die Zusammensetzung im Schritt a) auf den Träger aufgetragen wird, insbesondere mittels eines Pinsels, einer Spritze oder bevorzugt mittels einer Druckvorrichtung, bevorzugt einer 3D-Druckvorrichtung.

11. Verfahren nach einem der Ansprüche 8 bis 10, umfassend das Drucken des resistiven Elements auf den Träger.

12. Verfahren nach dem vorhergehenden Anspruch, wobei das Drucken mit einer Technik durchgeführt wird, die aus dem Siebdruck oder der Extrusion einer metallischen Druckfarbe oder einer metallischen Masse und dem Strahldrucken einer metallischen Druckfarbe ausgewählt wird.

13. Verfahren nach Anspruch 11, wobei das resistive Element mit einer Technik zur generativen Fertigung gedruckt wird, die insbesondere das Sprühen von Metallpartikeln auf den Träger umfasst, wobei die Geschwindigkeiten der Partikel supersonisch sind.

14. Verfahren zum Messen einer Verformung, umfassend:

   - das Bereitstellen einer Vorrichtung nach einem der Ansprüche 1 bis 7,
   - das Erwärmen des verformbaren Körpers auf eine Temperatur über 400 °C, sogar über 500 °C, sogar über 700 °C, sogar über 1000 °C, und
   - das Messen der Verformung des Körpers mittels des Dehnungsmessstreifens.

**Claims**

1. Device (50) for measuring a deformation, the device comprising a deformable body (55) and a strain gauge (5), the strain gauge comprising a support (15) in contact with the deformable body and a metallic resistive member (10) in contact with the support, the resistive member having a resistance which can vary with a deformation of the deformable body, the support being electrically insulating, porous, single-layered and being made of at least one support material comprising at least one refractory, optionally hydrated, ceramic compound, the support material comprising a hydrated cement and/or a cured ceramic adhesive.

2. Device according to Claim 1, the porosity of the support being between 10% and 40%.

3. Device according to either one of Claims 1 and 2, the support material being constituted by a hydrated cement and/or a cured ceramic adhesive.

4. Device according to any one of the preceding claims, the ceramic compound representing more than 50% of the mass of the support material, the ceramic compound being in particular chosen from $Al_2O_3$, AlN, $SiO_2$, MgO, a mica, SiC, $ZrO_2$, $ZrSiO_2$, CaO, $Cu_2O$, CuO, $Y_2O_3$, indium-tin oxide, $TiO_2$ and mixtures thereof.

5. Device according to any one of the preceding claims, the ceramic compound being an oxide.

6. Device according to any one of the preceding claims, the thickness of the support being between 0.025 mm and 5.00 mm.

7. Device according to any one of the preceding claims, the resistive member being a hydrated cement filled with a metal, preferably chosen from Ni, Ag and a mixture thereof.

8. Method for manufacturing a device for measuring a deformation, comprising the steps of:

   a) forming a layer by depositing a composition on a deformable body,
   b) curing the layer so as to form a support, the support being electrically insulating, porous, single-layered and being made of at least one support material comprising at least one refractory, optionally hydrated, ceramic compound, the support material comprising a hydrated cement and/or a cured ceramic adhesive,
   c) depositing a resistive member in contact with the support, such that the device is in accordance with any one of the preceding claims.

9. Method according to the preceding claim, the composition being a cement paste or a ceramic adhesive.

10. Method according to either one of Claims 8 and 9, the composition being coated, in step a), on the support, in particular by means of a brush, a syringe or preferably by means of a printing device, preferably a 3D printing device.

11. Method according to any one of claims 8 to 10, comprising the printing of the resistive member on the support.

12. Method according to the preceding claim, the printing being carried out by a technique chosen from screen printing or extrusion of a metallic ink or of a metallic paste, and inkjet printing of a metallic ink.

13. Method according to Claim 11, the resistive member being printed by an additive manufacturing technique, in particular comprising the spraying of metallic particles onto the support, the speeds of the particles being supersonic.

14. Method for measuring a deformation, comprising:

   - providing a device according to any one of Claims 1 to 7,
   - heating the deformable body to a temperature greater than 400°C, or greater than 500°C, or greater than 700°C, or greater than 1000°C, and
   - measuring the deformation of the body by means of the strain gauge.

(Art antérieur)

Fig. 1

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2942874 A1

**Littérature non-brevet citée dans la description**

- **M. MAIWALD et al.** INKtellingent printed strain gauge. *Sensors and Actuators A*, 2010, vol. 162, 198-201
- **J. HERRMANN et al.** Nanoparticle films as sensitive strain gauges. *Appl. Phys. Lett.*, 2007, vol. 91, 183105
- **P. KAYSER et al.** High temperature thin-films strain gauges. *Sensors and Actuators A*, 1993, vol. 37-38, 328-332